# EUROPÄISCHE PATENTANMELDUNG

(11) **EP 1 045 607 A2**
(43) Veröffentlichungstag der Anmeldung: **18.10.2000**
(21) Anmeldenummer: 00440058.6
(22) Anmeldetag: 28.02.2000
(51) Int. Cl.: H04Q 7/38

(54) **Vorregistrierung in einem zellularen Kommunikationssystem**

(30) Priorität: 15.04.1999 DE 19916991
(71) Anmelder: ALCATEL, 75008 Paris (FR)
(72) Erfinder: Sperber, Christoph, 75175 Pforzheim (DE)
(74) Vertreter: Dreiss, Fuhlendorf, Steimle & Becker

(57) **Zusammenfassung**

Die Erfindung betrifft ein Telekommunikations (TK)-System (1) mit mehreren Funkzellen (Cordless Telephone System, CTS1...CTS6), wobei in jeder Funkzelle (CTS1...CTS6) eine Basisstation (BS1...BS6) zur Koordination der Telekommunikations (TK)-Verbindung zwischen einer Basisstation (BS1) einer Funkzelle (CTS1) und einem in der Funkzelle (CTS1) befindlichen Funktelefon (2) vorgesehen ist. Um die Übergabe eines Funktelefons (2) von einer Funkzelle (CTS1) des TK-Systems (1) an eine andere Funkzelle (CTS2) des TK-Systems (1) in möglichst kurzer Zeit durchführen zu können, wird vorgeschlagen, daß die Basisstationen (BS1...BS6) des TK-Systems (1) zum Austausch von Systemsteuerungsinformationen mit einer zentralen Vermittlungsstelle (PABX) in Verbindung stehen und daß die Systemsteuerungsinformationen dem Funktelefon (2) vor einem Wechsel in eine andere Funkzelle (CTS2) bekannt sind.

## Beschreibung

Die vorliegende Erfindung betrifft ein Telekommunikations (TK)-System mit mehreren Funkzellen (Cordless Telephone System, CTS), wobei in jeder Funkzelle eine Basisstation zur Koordination der Telekommunikations (TK)-Verbindung zwischen einer Basisstation einer Funkzelle und einem in der Funkzelle befindlichen Funktelefon vorgesehen ist. Die Erfindung betrifft außerdem ein Verfahren zur Übergabe eines Funktelefons von einer Funkzelle (Cordless Telephone System, CTS) eines Telekommunikations (TK)-Systems an eine andere Funkzelle des TK-Systems.

Derartige TK-Systeme ermöglichen einem Teilnehmer eine drahtlose TK-Verbindung sowohl innerhalb begrenzter Zonen als auch national und international. Anders als beim klassischen Funken sind Sender und Empfänger nicht direkt miteinander verbunden, sondern verkehren über ein Netz von stationären Basisstationen miteinander. Jede Basisstation koordiniert die TK-Verbindung innerhalb eines räumlich begrenzten Bereichs, der sog. Funkzelle.

Der zellulare Aufbau des TK-Systems macht es erforderlich, daß innerhalb des TK-Systems Vorkehrungen getroffen werden, die eine Übergabe eines Funktelefons eines Teilnehmers von einer Funkzelle an eine andere Funkzelle erlauben, wenn sich der Teilnehmer von der einen Funkzelle zu der anderen Funkzelle bewegt. Die Übergabe muß sowohl ohne eine aktive TK-Verbindung (sog. Roaming) als auch mit einer aktiven TK-Verbindung (sog. Handover) sicher und zuverlässig funktionieren.

Aus dem Stand der Technik sind TK-Systeme bekannt, die nach dem Global System for Mobile Communications (GSM)-Standard arbeiten. Bei den GSM-TK-Systemen werden die zu übertragenden Informationen nach dem Time Division Multiple Access (TDMA) -Übertragungsverfahren in Übertragungsrahmen mit mehreren Zeitschlitzen übertragen, um eine bessere Auslastung vorhandener Übertragungskapazitäten zu erzielen.

Die Übertragungsrahmen von GSM-TK-Systemen sind üblicherweise in acht Zeitschlitze unterteilt. In einem Zeitschlitz sind Daten enthalten, die zwischen der Basisstation und einem bestimmten Funktelefon übertragen werden sollen. In einem Übertragungsrahmen können also in mehreren Zeitschlitzen die Daten für mehrere unabhängige Datenübertragungsverbindungen übertragen werden. Bei dem empfangenden Funktelefon wird die zu übertragende Information dann aus den Daten der entsprechenden Zeitschlitze mehrerer Übertragungsrahmen wieder rekonstruiert.

Nach dem GSM-Standard haben die Übertragungsrahmen jeweils eine Größe von acht Zeitschlitzen. Mindestens ein Zeitschlitz in einem Übertragungsrahmen einer Funkzelle ist für die Übermittlung von Systemsteuerungsinformationen reserviert (Broadcast Channel, BC). Die Systemsteuerungsinformationen umfassen bspw. die Anzahl der Funkzellen eines TK-Systems und die Konfiguration der einzelnen Funkzellen. Die Konfiguration der Funkzellen umfaßt bspw. die Übertragungsfrequenz, die Art der Verschachtelung oder die Art der Verwürfelung der Zeitschlitze des Übertragungsrahmens. Um eine TK-Verbindung zwischen der Basisstation einer Funkzelle und einem in der Funkzelle befindlichen Funktelefon aufbauen zu können ist es unbedingt notwendig, daß die Systemsteuerungsinformationen dem Funktelefon bekannt sind. In den restlichen Zeitschlitzen der Übertragungsrahmen können die Nutzdaten übermittelt werden.

Da je Funkzelle nur eine begrenzte Anzahl von Funktelefonen betrieben werden kann, werden bei GSM-TK-Systemen je nach Telekommunikations (TK)-Verkehrsaufkommen unterschiedlich große Funkzellen eingesetzt. Die GSM-TK-Systeme werden üblicherweise im Freien betrieben. Dort haben die Funkzellen eine Größe von etwa 10 bis 30 km (Großzelle), 1 bis 3 km (Kleinzelle) oder 100 bis 300 m (Mikrozelle).

Aus dem Stand der Technik ist es aber auch bekannt, TK-Systeme der eingangs genannten Art innerhalb abgeschlossener Bereiche (z. B. auf einem Fabrikgelände, in Bürogebäuden, in Fabrikhallen oder in privaten Haushalten) zu betreiben. Es sind auch GSM-TK-Systeme bekannt, die innerhalb abgeschlossener Bereiche betrieben werden. Bei diesen internen GSM-TK-Systemen muß im Vergleich zu den externen TK-Systemen mit einer wesentlich geringeren Sendeleistung gesendet werden, um eine Störung der externen TK-Systeme zu vermeiden. Aus diesem Grund sind die Funkzellen der internen TK-Systeme auch wesentlich kleiner als die der externen TK-Systeme. Sobald ein Teilnehmer mit seinem Funktelefon von außerhalb in einen abgeschlossenen Bereich kommt, in dem ein internes TK-System installiert ist, meldet sich das Funktelefon bei der nächstgelegenen Basisstation des internen TK-Systems zum Einbuchen an und wird bei der Basisstation authentisiert und registriert. Durch die internen TK-Systeme kann innerhalb der abgeschlossenen Bereiche wesentlich kostengünstiger telefoniert werden als dies über den Umweg eines externen TK-Systems möglich wäre. Hinzu kommt der Vorteil, daß die Teilnehmer über dasselbe Funktelefon mit derselben Rufnummer sowohl im Freien über externe TK-Systeme als auch innerhalb abgeschlossener Bereiche über interne TK-Systeme erreichbar sind.

Bei den bekannten internen TK-Systemen kann die Übergabe eines Funktelefons von einer Funkzelle des TK-Systems an eine andere Funkzelle des TK-Systems auf unterschiedliche Arten erfolgen. Zunächst muß das Funktelefon ermitteln, wann ein Handover oder ein Roaming durchgeführt werden muß. Bei GSM-TK-Systemen überprüft das Funktelefon bspw. periodisch den Pegel (RXlev) und die Bitfehlerrate (RXqual) einer aktiven TK-Verbindung und ermittelt daraus ein Übergabekriterium. Wenn die Gesprächsqualität unzureichend ist, muß ein Handover der TK-Verbindung zu einer anderen Funkzelle erfolgen. Der Handover muß mit einer möglichst geringen, für den Teilnehmer zumindest nicht hörbaren, Unterbrechung der TK-Verbindung erfolgen. In ähnlicher Weise wird ein Übergabekriterium ermittelt. Beim Roaming besteht zwar keine aktive TK-Verbindung, deren Qualität überprüft werden könnte. Allerdings tauschen das Funktelefon und die Basisstation von Zeit zu Zeit ein sog. Beaconsignal aus, anhand dessen Qualität ein Übergabekriterium ermittelt werden kann.

Zur Vorbereitung eines Handover fragt das Mobiltelefon bei den Basisstationen anderer Funkzellen des TK-System an, um eine geeignete Funkzelle zu finden, an die das Funktelefon übergeben werden kann. Eine geeignete Funkzelle muß u. a. freie Übertragungskapazitäten und einen starken Pegel haben. Sobald eine geeignete Funkzelle gefunden wurde, müssen die Systemsteuerungsinformationen dieser Funkzelle an das Funktelefon übermittelt werden, damit das Funktelefon überhaupt eine TK-Verbindung mit der Basisstation der neuen Funkzelle aufbauen und halten kann. Dann baut das Funktelefon unter Ausnutzung der übermittelten Systemsteuerungsinformationen eine TK-Verbindung zu der Basisstation der neuen Funkzelle auf. Der Aufbau der TK-Verbindung umfaßt das Einbuchen, die Registrierung des Funktelefons bei der Basisstation der neuen Funkzelle und eine Synchronisation des Funktelefons mit der neuen Basisstation. U. U. wird die Authentisierung des Funktelefons bzw. des Teilnehmers überprüft und die alte TK-Verbindung abgebaut.

Das bekannte Verfahren zur Übergabe eines Funktelefons von einer Funkzelle an eine andere hat jedoch den Nachteil, daß es sehr zeitaufwendig ist. Insbesondere die Synchronisation trägt wesentlich dazu bei, daß für die gesamte Übergabe ein Zeitraum von 500 ms bis 1 s benötigt wird. Ein derart langer Zeitraum hat sich insbesondere bei internen TK-Systemen als nicht praxisgerecht erwiesen, da bei internen TK-Systemen in bestimmten Situationen eine wesentlich schnellere Übergabe des Funktelefons erforderlich sein kann. Das ist bspw. dann der Fall, wenn der Teilnehmer in einem Gebäude einen abgeschirmten Raum betritt und eine Stahltür oder eine Aufzugtür innerhalb weniger Millisekunden hinter ihm ins Schloß fällt. Ohne eine besonders rasche Übergabe des Funktelefons wird in solchen Situationen die TK-Verbindung unterbrochen.

Aus der DE 197 16 344 A1 ist ein internes TK-System bekannt, bei dem ein Gleichlauf aller TK-Endgeräte (Funktelefone) durch regelmäßig wiederholte Nachsynchronisation der Funktelefone erzielt wird. Bei der Übergabe eines Funktelefons von einer Funkzelle des TK-Systems an eine andere Funkzelle des TK-Systems ist ein Übermitteln von Systemsteuerungsinformationen vor der Übergabe des Funktelefons, insbesondere ein zeitaufwendiges Übermitteln von Synchronisationsinformationen, somit nicht notwendig.

Aus der DE 196 32 261 A1 ist ebenfalls ein internes TK-System bekannt, wobei es dort nicht um die Übergabe eines TK-Endgeräts (Funktelefon) von einer Funkzelle des TK-Systems an eine andere Funkzelle des TK-Systems, sondern vielmehr um den Aufbau einer TK-Verbindung geht. Um im Mittel einen schnelleren Verbindungsaufbau zu erreichen, werden Funkkanäle, über die der Aufbau einer TK-Verbindung fehlgeschlagen ist, zumindest temporär als nicht verwendbare Funkkanäle markiert und zumindest temporär für einen Verbindungsaufbau nicht mehr herangezogen.

Ausgehend von den Nachteilen des Standes der Technik ist es eine Aufgabe der vorliegenden Erfindung ein TK-System der eingangs genannten Art dahingehend auszugestalten und weiterzubilden, daß die Übergabe eines Funktelefons von einer Funkzelle des TK-Systems an eine andere Funkzelle des TK-Systems in möglichst kurzer Zeit erfolgt.

Zur Lösung dieser Aufgabe schlägt die Erfindung ausgehend von dem TK-System der eingangs genannten Art vor, daß die Basisstationen des TK-Systems zum Austausch von Systemsteuerungsinformationen mit einer zentralen Vermittlungsstelle in Verbindung stehen und daß die Systemsteuerungsinformationen dem Funktelefon vor einem Wechsel in eine andere Funkzelle bekannt sind.

Bei dem erfindungsgemäßen TK-System sind die Basisstationen mit der zentralen Vermittlungsstelle vernetzt, so dass sie untereinander Systemsteuerungsinformationen austauschen können. Die Systemsteuerungsinformationen umfassen bspw. die Anzahl und Topologie der Funkzellen des TK-Systems und die Konfiguration der einzelnen Funkzellen. Die Konfiguration der Funkzellen umfaßt bspw. die Übertragungsfrequenz, die Art der Verschachtelung oder die Art der Verwürfelung der Zeitschlitze eines Übertragungsrahmens. Die Systemsteuerungsinformationen können für jede Funkzelle unterschiedlich sein.

Das Funktelefon ist bei der Basisstation einer der Funkzellen des TK-Systems registriert. Über diese Basisstation werden eingehende Anrufe an das Funktelefon und von dem Funktelefon abgehende Anrufe übermittelt. Sobald ein Teilnehmer mit einem eingeschalteten Funktelefon von außerhalb des TK-Systems in einen Bereich kommt, in dem das TK-System installiert ist, oder sobald ein Teilnehmer sein Funktelefon in diesem Bereich einschaltet, meldet sich das Funktelefon bei der nächstgelegenen Basisstation des TK-Systems zum Einbuchen an und wird bei der Basisstation registriert. Wenn sich der Teilnehmer nun mit seinem Funktelefon aus der Funkzelle heraus in eine andere Funkzelle bewegt, wird eine Übergabe des Funktelefons von der Basisstation der ursprünglichen Funkzelle an die Basisstation der anderen Funkzelle vollzogen. Da bei dem erfindungsgemäßen TK-System dem Funktelefon die Systemsteuerungsinformationen bereits vor einem Wechsel in eine andere Funkzelle bekannt sind, kann auf die zeitaufwendige Übertragung der Systemsteuerungsinformationen im Rahmen der Übergabe des Funktelefons an eine andere Funkzelle verzichtet werden.

Bei dem erfindungsgemäßen TK-System kann die Übergabe eines Funktelefons von einer Funkzelle an eine andere besonders schnell und dennoch zuverlässig durchgeführt werden. Ein Handover kann mit einer besonders geringen, für den Teilnehmer nicht hörbaren, Unterbrechung der TK-Verbindung erfolgen.

Das erfindungsgemäße TK-System wird vorzugsweise als internes TK-System innerhalb eines abgeschlossenen Bereichs (z. B. auf einem Fabrikgelände, in einem Bürogebäude, in einer Fabrikhalle oder in einem privaten Haushalt) betrieben. Der für die Übergabe des Funktelefons an eine andere Funkzelle benötigte Zeitraum ist so kurz, daß selbst in dem Sonderfall, wenn der Teilnehmer in einem Gebäude einen abgeschirmten Raum betritt und eine Stahltür oder eine Aufzugtür innerhalb weniger Millisekunden hinter ihm ins Schloß fällt, eine sichere und zuverlässige Übergabe des Funktelefons ohne eine für den Teilnehmer hörbare Unterbrechung der TK-Verbindung möglich ist.

Das Funktelefon kann auch dann in einer Funkzelle eines internen TK-Systems registriert sein, wenn es zur gleichen Zeit auch noch in einem externen TK-System (Public Land Mobile Network, PLMN) registriert ist. Für einen Teilnehmer bedeutet dies, daß er in Reichweite eines internen TK-Systems die Vorteile von internen TK-Systemen ausnutzen kann, daß er aber nach wie vor auch über das externe TK-System (PLMN) erreichbar ist. Dies wird dadurch ermöglicht, daß das Funktelefon regelmäßig einen Broadcast Channel eines exterenen TK-Sytems (PLMN) abhört und bei Bedarf eine TK-Verbindung in dem externen TK-Sytem (PLMN) aufbaut. Das Funktelefon hört den Broadcast Channel auch dann ab, wenn es in einer Funkzelle eines internen TK-Systems registriert ist.

Gemäß einer vorteilhaften Weiterbildung der vorliegenden Erfindung wird vorgeschlagen, daß die Basisstationen der einzelnen Funkzellen miteinander synchronisiert sind. Die Basisstationen sind miteinander insbesondere zeitlich synchronisiert. Es ist aber auch daran gedacht, die Übertragungsfrequenzen und/oder andere Übertragungsparameter der Basisstationen miteinander zu synchronisieren. Die Synchronisation der Basisstationen erfolgt wie der Austausch von Systemsteuerungsinformationen über Verbindungsleitungen zwischen den Basisstationen der Funkzellen des TK-Systems und der zentralen Vermittlungsstelle. Durch die Synchronisation der Basisstationen der einzelnen Funkzellen untereinander kann bei einer Übergabe eines Funktelefons von einer Funkzelle des TK-Systems an eine andere Funkzelle auf eine zeitaufwendige Synchronisation des Funktelefons mit der Basisstation der neuen Funkzelle verzichtet werden. Dadurch kann die Übergabe des Funktelefons in einem noch kürzeren Zeitraum vollzogen werden. Außerdem kann durch den Verzicht auf die Synchronisation das Funkaufkommen zwischen dem Funktelefon und der Basisstation der Funkzelle, in die gewechselt wird, reduziert werden. Das führt zu einem reduzierten Interferenzaufkommen und damit zu weniger Störungen anderer Funkverbindungen.

Gemäß einer bevorzugten Ausführungsform der Erfindung wird vorgeschlagen, daß die Übertragungsrahmen in einer Funkzelle des TK-Systems um mindestens einen Zeitschlitz relativ zu den Übertragungsrahmen zumindest der benachbarten Funkzellen des TK-Systems versetzt sind, und daß dem Funktelefon die Anzahl der Zeitschlitze, um die die Übertragungsrahmen zueinander versetzt sind, als Systemsteuerungsinformation bekannt ist. Ein Übertragungsverfahren mit Übertragungsrahmen, die in mehrere Zeitschlitze unterteilt sind, ist bspw. das Time Division Multiple Access (TDMA)-Verfahren. Die Anzahl der Zeitschlitze, um die die Übertragungsrahmen zueinander versetzt sind, ist dem Funktelefon als Systemsteuerungsinformation vor einem Wechsel in eine andere Funkzelle bekannt. Aufgrund der zueinander versetzten Übertragungsrahmen der verschiedenen Funkzellen, ist es dem Funktelefon möglich, die Basisstationen der einzelnen Funkzellen zu unterscheiden und im Rahmen der Übergabe des Funktelefons an eine andere Funkzelle eine Basisstation gezielt anzusprechen und zu dieser eine TK-Verbindung aufzubauen.

Falls das TK-System mehr Funkzellen mit derselben Übertragungsfrequenz aufweist als die Übertragungsrahmen Zeitschlitze haben, sind zumindest die Übertragungsrahmen der benachbarten Funkzellen mit derselben Übertragungsfrequenz um einen oder mehrere Zeitschlitze versetzt. Unter derselben Übertragungsfrequenz wird im vorliegenden Fall sowohl dieselbe kontinuierliche Frequenz als auch dieselbe durch einen Hopping Algorithmus vorgegebene Frequenz verstanden. Dadurch kann das Funktelefon zwar nicht alle Funkzellen, aber doch die für eine Übergabe des Funktelefons wichtigen, benachbarten Funkzellen voneinander unterscheiden.

Vorteilhafterweise weist das TK-System höchstens so viele Funkzellen mit derselben Übertragungsfrequenz auf wie die Übertragungsrahmen Zeitschlitze haben. Die Übertragungsrahmen einer Funkzelle des TK-Systems sind um mindestens einen Zeitschlitz relativ zu den Übertragungsrahmen der übrigen Funkzellen versetzt.

Gemäß einer besonders bevorzugten Ausführungsform sind die Übertragungsrahmen der Funkzellen relativ zu Übertragungsrahmen einer virtuellen Referenz-übertragungsrahmen-Struktur versetzt. Dadurch kann auf einfache Weise angegeben werden, um wie viele Zeitschlitze die einzelnen Übertragungsrahmen zueinander versetzt sind.

Eine weitere Aufgabe der vorliegenden Erfindung besteht darin, ein Verfahren der eingangs genannten Art dahingehend auszugestalten und weiterzubilden, daß ein Funktelefon von einer Funkzelle des TK-Systems zu einer anderen Funkzelle des TK-Systems in möglichst kurzer Zeit übergeben werden kann.

Zur Lösung dieser Aufgabe schlägt die Erfindung ausgehend von dem Verfahren der eingangs genannten Art vor, daß dem Funktelefon vor der Übergabe des Funktelefons von der einen Funkzelle an die andere Funkzelle Systemsteuerungsinformationen übermittelt werden und das Funktelefon unter Ausnutzung der Systemsteuerungsinformationen in der anderen Funkzelle registriert wird.

Die Übergabe des Funktelefons kann ohne eine aktive TK-Verbindung (sog. Roaming) oder mit einer aktiven TK-Verbindung (sog. Handover) erfolgen. sicher und zuverlässig funktionieren. Da bei dem erfindungsgemäßen Verfahren dem Funktelefon die Systemsteuerungsinformationen bereits vor einem Wechsel in eine andere Funkzelle bekannt sind, kann auf eine zeitaufwendige Übertragung der Systemsteuerungsinformationen im Rahmen der Übergabe des Funktelefons an eine andere Funkzelle verzichtet werden.

Gemäß einer bevorzugten Weiterbildung der vorliegenden Erfindung werden die Systemsteuerungsinformationen dem Funktelefon im Rahmen der Registrierung in dem TK-System übermittelt. Sobald ein Teilnehmer mit einem eingeschalteten Funktelefon von außerhalb des TK-Systems in einen Bereich kommt, in dem das TK-System installiert ist, oder sobald ein Teilnehmer sein Funktelefon in diesem Bereich einschaltet, meldet sich das Funktelefon bei der nächstgelegenen Basisstation des TK-Systems zum Einbuchen an und wird bei der Basisstation registriert. Im Rahmen dieser Registrierung werden die Systemsteuerungsinformationen dem Funktelefon übermittelt.

Vorzugsweise werden die Systemsteuerungsinformationen dem Funktelefon im Rahmen der Registrierung in einer Funkzelle übermittelt. Wenn das Funktelefon in dem TK-System registriert wurde und sich der Teilnehmer mit seinem Funktelefon aus der Funkzelle heraus in eine andere Funkzelle bewegt, wird eine Übergabe des Funktelefons von der Basisstation der ursprünglichen Funkzelle an die Basisstation der anderen Funkzelle vollzogen. Im Rahmen der Übergabe des Funktelefons wird das Funktelefon u. a. in der neuen Funkzelle registriert. Im Rahmen dieser Registrierung, also bei jedem Wechsel der Funkzelle, können die Systemsteuerungsinformationen dem Funktelefon übermittelt werden.

Es ist denkbar, daß die Übergabe des Funktelefons von der einen Funkzelle in eine andere Funkzelle ohne eine aktive Telekommunikations (TK)-Verbindung erfolgt. Eine solche Übergabe wird als Roaming bezeichnet.

Gemäß einer bevorzugten Ausführungsform der Erfindung wird das Funktelefon während einer TK-Verbindung von der einen Funkzelle an die andere Funkzelle übergeben. Bei der TK-Verbindung kann es sich entweder um eine aktive TK-Verbindung (beim Handover) oder um ein sog. Beaconsignal (beim Roaming) handeln. Eine solche Übergabe wird als Handover bezeichnet. Durch das erfindungsgemäße Verfahren kann der Handover innerhalb kürzester Zeit und ohne eine für den Teilnehmer hörbaren Unterbrechung der TK-Verbindung vollzogen werden.

Gemäß einer vorteilhaften Weiterbildung der vorliegenden Erfindung wird vorgeschlagen, daß die im Rahmen der TK-Verbindung zu übertragenden Informationen nach dem Time Division Multiple Access (TDMA)-Übertragungsverfahren in Übertragungsrahmen mit mehreren Zeitschlitzen übertragen werden, und daß die Systemsteuerungsinformationen in einem Systemsteuerungsfenster des Übertragungsrahmens an das Funktelefon übertragen werden.

Um eine bessere Auslastung vorhandener Übertragungskapazitäten zu erzielen, wird erfindungsgemäß des weiteren vorgeschlagen, daß die im Rahmen der TK-Verbindung zu übertragenden Informationen nach dem Time Division Multiple Access (TDMA)-Übertragungsverfahren in Übertragungsrahmen mit mehreren Zeitschlitzen übertragen werden, und daß die Systemsteuerungsinformationen in einem Nutzdatenfenster des Übertragungsrahmens an das Funktelefon übertragen werden.

Gemäß einer bevorzugten Ausführungsform der Erfindung wird vorgeschlagen, daß die Übertragungsrahmen in einer Funkzelle des TK-Systems um mindestens einen Zeitschlitz relativ zu den Übertragungsrahmen zumindest der benachbarten Funkzellen mit derselben Übertragungsfrequenz versetzt sind, und daß dem Funktelefon die Anzahl der Zeitschlitze, um die die Übertragungsrahmen zueinander versetzt sind, als Systemsteuerungsinformationen übermittelt wird.

Des weiteren wird vorgeschlagen, daß das TK-System höchstens so viele Funkzellen mit derselben Übertragungsfrequenz aufweist wie die Übertragungsrahmen Zeitschlitze haben und daß die Übertragungsrahmen einer Funkzelle des TK-Systems um mindestens einen Zeitschlitz relativ zu den Übertragungsrahmen der übrigen Funkzellen mit derselben Übertragungsfrequenz versetzt sind.

Um auf möglichst einfache Weise angeben zu können, um wie viele Zeitschlitze die einzelnen Übertragungsrahmen zueinander versetzt sind, wird vorgeschlagen, eine virtuelle Referenz-Übertragungsrahmen-Struktur zu definieren. Die Übertragungsrahmen der Funkzellen sind relativ zu den Übertragungsrahmen der Referenz-übertragungsrahmen-Struktur versetzt. Der Versatz der Übertragungsrahmen relativ zu den Übertragungsrahmen der Referenz-Übertragungsrahmen-Struktur kann von Funkzelle zu Funkzelle zwischen Null Zeitschlitzen und der maximalen Anzahl von Zeitschlitzen der Übertragungsrahmen variieren.

Der Versatz wird dem Funktelefon als Systemsteuerungsinformation übermittelt.

Gemäß einer vorteilhaften Weiterbildung der vorliegenden Erfindung wird vorgeschlagen, daß mindestens ein Übertragungsparameter der TK-Verbindung nach einem bestimmten Algorithmus geändert wird, wobei dem Funktelefon der Algorithmus zumindest der benachbarten Funkzellen als Systemsteuerungsinformationen übermittelt wird. Bei dieser Weiterbildung unterliegt die Anzahl der Funkzellen mit derselben Übertragungsfrequenz keinerlei Beschränkungen aufgrund der Anzahl der Zeitschlitze der Übertragungsrahmen. Zur Unterscheidung der Übertragungsrahmen der einzelnen Funkzellen wird in erster Linie nicht der Versatz der Übertragungsrahmen zueinander um einen oder mehrere Zeitschlitze benutzt, sondern vielmehr der Algorithmus (sog. Hopping Algorithmus), nach dem zumindest einer der Übertragungsparameter der TK-Verbindung geändert wird. Zusätzlich zu dem Hopping Algorithmus können die Übertragungsrahmen der Funkzellen um einen oder mehrere Zeitschlitze versetzt sein.

Vorteilhafterweise wird die Übertragungsfrequenz nach einem bestimmten Algorithmus geändert, wobei dem Funktelefon der Algorithmus zumindest der benachbarten Funkzellen als Systemsteuerungsinformationen übermittelt wird. Der Algorithmus, nach dem die Übertragungsfrequenz geändert wird, wird auch als Frequency Hopping Algorithmus bezeichnet.

Gemäß einer anderen vorteilhaften Weiterbildung der vorliegenden Erfindung werden Statistiken darüber geführt werden, in welche andere Funkzelle von einer Funkzelle bevorzugt gewechselt wird, wobei dem Funktelefon die Vorzugswechselrichtungen als Systemsteuerungsinformationen übermittelt wird. Die Statistiken können in der zentralen Vermittlungsstelle oder in einer Basisstation einer Funkzelle geführt werden. In Kenntnis der Vorzugswechselrichtungen aus einer Funkzelle heraus kann das Funktelefon bei einer bevorstehenden Übergabe des Funktelefons (Handover oder Roaming) von dieser Funkzelle gezielt die bevorzugten anderen Funkzellen ansprechen, ohne daß es erst eine geeignete Funkzelle finden muß. Auf diese Weise kann die Übergabe des Funktelefons von einer Funkzelle in eine andere weiter beschleunigt werden. Außerdem kann durch die Statistiken auf die Kommunikation mit Nachbarzellen zur Ermittlung einer geeigneten Funkzelle, in die gewechselt werden kann, verzichtet werden. Die Funkzelle, in die statistisch gesehen gewechselt werden soll, kann gezielt angesprochen werden. Das Funkaufkommen zwischen dem Funktelefon und den Basisstationen der Funkzellen kann dadurch reduziert werden. Das führt zu einem reduzierten Interferenzaufkommen und damit zu weniger Störungen anderer Funkverbindungen, insbesondere anderer Funknetze.

Gemäß einer bevorzugten Ausführungsform werden die Systemsteuerungsinformationen auf Anfrage des Funktelefons an das Funktelefon übermittelt. Alternativ wird vorgeschlagen, daß die Systemsteuerungsinformationen mit einer bestimmten Bakenfrequenz periodisch an das Funktelefon übermittelt werden.

Ein bevorzugtes Ausführungsbeispiel der vorliegenden Erfindung wird im Folgenden anhand der Zeichnungen näher erläutert. Es zeigen:
- Fig. 1: die Struktur eines erfindungsgemäßen Telekommunikations (TK)-Systems gemäß einer bevorzugten Ausführungsform;
- Fig. 2: den schematischen Aufbau des TK-Systems gemäß Fig. 1; und
- Fig. 3: eine Rahmenstruktur, in der die zu übermittelnden Informationen bei dem TK-System gemäß Fig. 1 und Fig. 2 übermittelt wird.

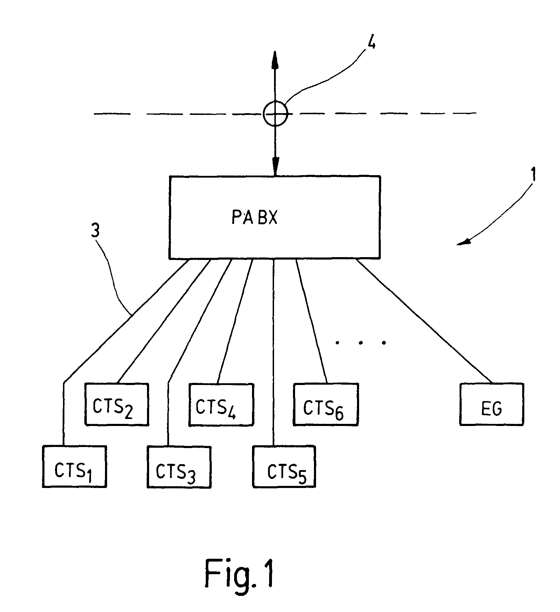

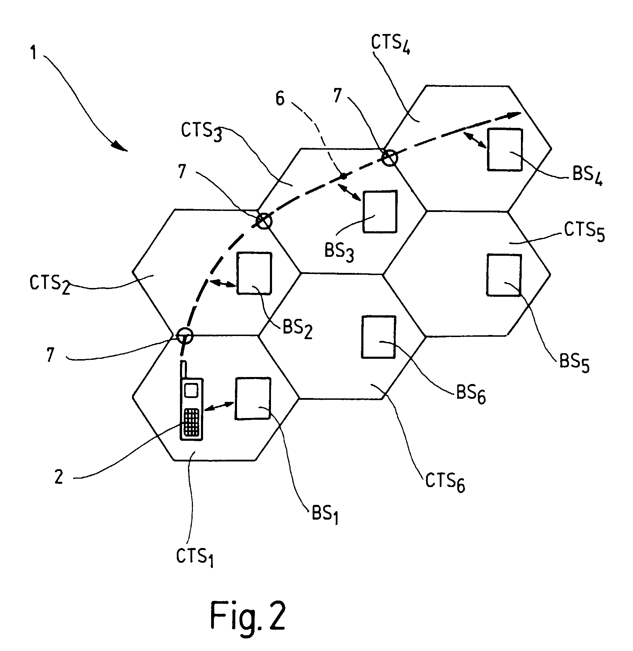

In Fig. 1 und Fig. 2 ist ein erfindungsgemäßes Telekommunikations (TK)-System gemäß einer bevorzugten Ausführungsform in seiner Gesamtheit mit dem Bezugszeichen 1 gekennzeichnet. Das TK-System 1 weist sechs Funkzellen (Cordless Telephone System) CTS1...CTS6 auf. In jeder Funkzelle CTS1...CTS6 ist eine Basisstation BS1...BS6 vorgesehen. Die Basisstation BS1...BS6 einer Funkzelle CTS1...CTS6 koordiniert eine Telekommunikations (TK)-Verbindung zwischen der Basisstation BS1...BS6 und einem in der Funkzelle CTS1...CTS6 befindlichen Funktelefon 2 (vgl. Fig. 2).

Das TK-System 1 arbeitet nach dem Global System for Mobile Communications (GSM)-Standard. Bei dem GSM-TK-System 1 werden die zu übertragenden Informationen nach dem Time Division Multiple Access (TDMA)-Übertragungsverfahren in Übertragungsrahmen 5 mit acht Zeitschlitzen übertragen, um eine bessere Auslastung vorhandener Übertragungskapazitäten zu erzielen. In einem Zeitschlitz sind Daten enthalten, die zwischen der Basisstation BS1...BS6 und einem bestimmten Funktelefon 2 übertragen werden sollen. In einem Übertragungsrahmen 5 können also in mehreren Zeitschlitzen die Daten für mehrere unabhängige Datenübertragungsverbindungen übertragen werden. Bei dem empfangenden Funktelefon 2 wird die zu übertragende Information dann aus den Daten der entsprechenden Zeitschlitze mehrerer Übertragungsrahmen 5 wieder rekonstruiert.

Die Basisstationen BS1...BS6 des TK-Systems 1 stehen zum Austausch von Systemsteuerungsinformationen mit einer zentralen Vermittlungsstelle PABX über Verbindungsleitungen 3 in Verbindung. Die Systemsteuerungsinformationen umfassen bspw. die Anzahl der Funkzellen CTS1...CTS6 eines TK-Systems 1 und die Konfiguration und Topologie der einzelnen Funkzellen CTS1...CTS6. Die Konfiguration der Funkzellen CTS1...CTS6 umfaßt bspw. die Übertragungsfrequenz, die Art der Verschachtelung oder die Art der Verwürfelung der Zeitschlitze des Übertragungsrahmens 5. Die Vermittlungsstelle PABX steht über eine ISDN-, eine PSTN-oder eine andere Schnittstelle 4 mit einem analogen oder digitalen Telekommunikations (TK)-Netz in Verbindung. Neben den Basisstationen BS1...BS6 stehen auch andere Endgeräte EG mit der zentralen Vermittlungsstelle PABX in Verbindung. Das Endgerät EG ist bspw. als herkömmliches drahtgebundenes Telefongerät, Telefaxgerät und/oder als Modulator/Demodulator (Modem) für einen Computer ausgebildet. Über die Verbindungsleitungen 3 erfolgt auch eine zeitliche Synchronisation der Basisstationen BS1...BS6 des TK-Systems 1.

Um eine TK-Verbindung zwischen der Basisstation BS1...BS6 einer Funkzelle CTS1...CTS6 und einem in der Funkzelle CTS1...CTS6 befindlichen Funktelefon 2 aufbauen zu können ist es unbedingt notwendig, daß die Systemsteuerungsinformationen dem Funktelefon 2 bekannt sind. Bei dem vorliegenden TK-System 1 werden die Systemsteuerungsinformationen dem Funktelefon 2 vor einem Wechsel in eine andere Funkzelle CTS1...CTS6, genauer gesagt, im Rahmen der Registrierung des Funktelefons 2 bei dem TK-System 1 übermittelt. Sobald ein Teilnehmer mit einem eingeschalteten Funktelefon 2 von außerhalb des TK-Systems 1 in einen Bereich kommt, in dem das TK-System 1 installiert ist, oder sobald ein Teilnehmer sein Funktelefon 2 in diesem Bereich einschaltet, meldet sich das Funktelefon 2 bei der nächstgelegenen Basisstation BS1 (vgl. Fig. 2) des TK-Systems 1 zum Einbuchen an und wird bei der Basisstation BS1 registriert.

Es ist auch denkbar, daß die Systemsteuerungsinformationen im Rahmen der Registrierung des Funktelefons 2 bei der Basisstation BS1...BS6 einer Funkzelle CTS1...CTS6 übermittelt werden. Wenn das Funktelefon 2 bei dem TK-System 1 in der Funkzelle CTS1 (vgl. Fig. 2) registriert wurde und sich der Teilnehmer mit seinem Funktelefon 2 aus der Funkzelle CTS1 heraus entlang des gestrichelten Pfeils 6 in eine andere Funkzelle CTS2 bewegt, wird eine Übergabe des Funktelefons 2 von der Basisstation BS1 der ursprünglichen Funkzelle CTS1 an die Basisstation BS2 der anderen Funkzelle CTS2 vollzogen. Der Ort der Übergabe ist in Fig. 2 mit 7 bezeichnet. Im Rahmen der Übergabe des Funktelefons 2 wird das Funktelefon 2 u. a. in der neuen Funkzelle CTS2 registriert. Im Rahmen dieser Registrierung, also bei jedem Wechsel der Funkzelle CTS1...CTS6, werden die Systemsteuerungsinformationen dem Funktelefon 2 übermittelt. Ebenso verhält es sich bei einem Wechsel von der Funkzelle CTS2 in die Funkzelle CTS3 und von der Funkzelle CTS3 in die Funkzelle CTS4.

Dadurch daß dem Funktelefon 2 des TK-Systems 1 bereits vor einem Wechsel in eine andere Funkzelle CTS1...CTS6 bekannt ist, kann auf eine zeitaufwendige Übertragung der Systemsteuerungsinformationen im Rahmen der Übergabe des Funktelefons 2 an eine andere Funkzelle CTS1...CTS6 verzichtet werden. Die Übergabe kann deshalb besonders schnell und bei einer aktiven TK-Verbindung ohne eine für den Teilnehmer hörbaren Unterbrechung der TK-Verbindung erfolgen.

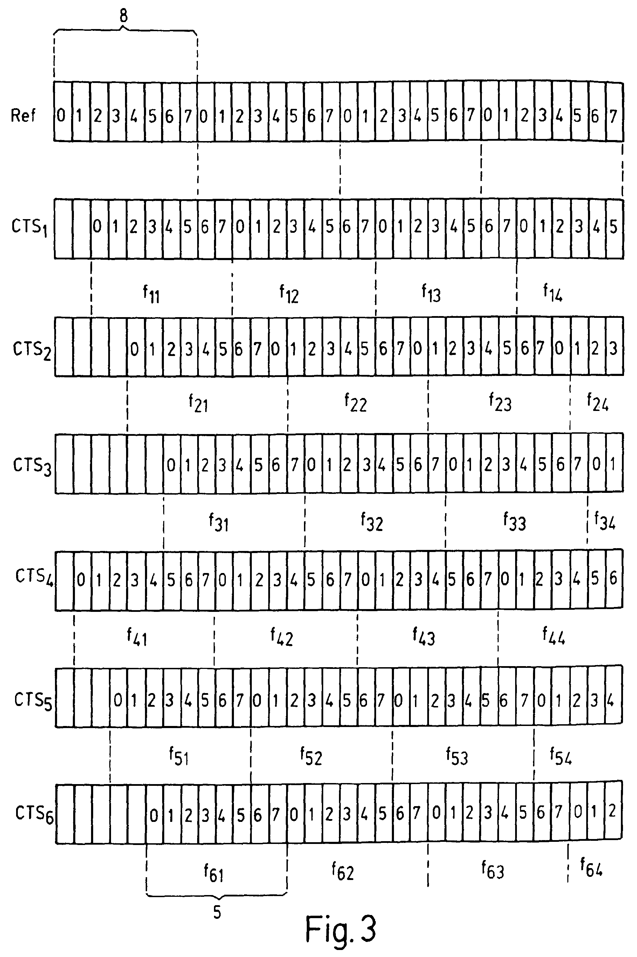

Die Übertragungsrahmen 5 (vgl. Fig. 3) in einer Funkzelle CTS1 des TK-Systems 1 sind um mindestens einen Zeitschlitz relativ zu den Übertragungsrahmen 5 der anderen Funkzellen CTS2...CTS6 des TK-Systems 1 versetzt. Genauer gesagt, sind die Übertragungsrahmen 5 einer Funkzelle CTS1...CTS6 relativ zu virtuellen Übertragungsrahmen 8 einer Referenz-übertragungsrahmen-Struktur Ref versetzt. So sind bspw. die Übertragungsrahmen 5 der Funkzelle CTS1 um zwei Zeitschlitze, die der Funkzelle CTS2 um vier Zeitschlitze, die der Funkzelle CTS3 um sechs Zeitschlitze, die der Funkzelle CTS4 um einen Zeitschlitz, die der Funkzelle CTS5 um drei Zeitschlitze und die der Funkzelle CTS6 um fünf Zeitschlitze relativ zu den virtuellen Übertragungsrahmen 8 versetzt. Die Anzahl der Zeitschlitze, um die der Übertragungsrahmen 5 einer Funkzelle CTS1...CTS6 relativ zu den Übertragungsrahmen 8 versetzt ist, wird als Teil der Systemsteuerungsinformationen an das Funktelefon 2 übermittelt. Aufgrund der zueinander versetzten Übertragungsrahmen 5 der verschiedenen Funkzellen CTS1...CTS6, ist es dem Funktelefon 2 möglich, die Basisstationen BS1...BS6 der einzelnen Funkzellen CTS1...CTS6 voneinander zu unterscheiden und bspw. im Rahmen der Übergabe des Funktelefons 2 von der Funkzelle CTS1 an die Funkzelle CTS2 die Basisstation BS2 gezielt anzusprechen und zu dieser eine TK-Verbindung aufzubauen.

Die Übertragungsfrequenz f11, f12, ..., f63, f64 der Übertragungsrahmen 5 der einzelnen Funkzellen CTS1...CTS6 werden nach einem bestimmten Algorithmus, dem sog. Frequency Hopping Algorithmus, geändert. Dem Funktelefon 2 in der Funkzelle CTS1 wird der Frequency Hopping Algorithmus zumindest der benachbarten Funkzellen CTS2, CTS6 als Systemsteuerungsinformationen übermittelt. Außer dem Frequency Hopping Algorithmus können dem Funktelefon 2 vor einem Wechsel von einer Funkzelle CTS1 in eine andere Funkzelle CTS2 auch andere Übertragungsparameter übermittelt werden.

Bei dem erfindungsgemäßen TK-System 1 hat das Funktelefon 2 jederzeit Kenntnis darüber, zu welchem Zeitpunkt die Übertragungsrahmen 5 der Funkzellen CTS1...CTS6 des TK-Systems 1, zumindest aber die Übertragungsrahmen 5 der benachbarten Funkzellen CTS2, CTS6, beginnen. Außerdem weiß das Funktelefon 2 nach welchen Übertragungsparametern, insbesondere nach welchem Frequency Hopping Algorithmus, die Übertragung der Informationen in den einzelnen Funkzellen CTS1...CTS6, zumindest aber in den benachbarten Funkzellen CTS2, CTS6, erfolgt. Dadurch kann die Übergabe des Funktelefons 2 von einer Funkzelle CTS1 in eine andere Funkzelle CTS2 entscheidend verkürzt werden.

## Patentansprüche

1. Telekommunikations (TK)-System (1) mit mehreren Funkzellen (Cordless Telephone System, CTS1...CTS6), wobei in jeder Funkzelle (CTS1...CTS6) eine Basisstation (BS1...BS6) zur Koordination der Telekommunikations (TK)-Verbindung zwischen einer Basisstation (BS1) einer Funkzelle (CTS1) und einem in der Funkzelle (CTS1) befindlichen Funktelefon (2) vorgesehen ist, **dadurch gekennzeichnet**, daß die Basisstationen (BS1...BS6) des TK-Systems (1) zum Austausch von Systemsteuerungsinformationen mit einer zentralen Vermittlungsstelle (PABX) in Verbindung stehen und daß die Systemsteuerungsinformationen dem Funktelefon (2) vor einem Wechsel in eine andere Funkzelle (CTS2) bekannt sind.

2. TK-System (1) nach Anspruch 1, dadurch gekennzeichnet, daß die Basisstationen (BS1...BS6) der einzelnen Funkzellen (CTS1...CTS6) miteinander synchronisiert sind.

3. TK-System (1) nach Anspruch 1 oder 2, dadurch gekennzeichnet, daß die Übertragungsrahmen (5) in einer Funkzelle (CTS1) des TK-Systems (1) um mindestens einen Zeitschlitz relativ zu den Übertragungsrahmen (5) zumindest der benachbarten Funkzellen (CTS2, CTS6) des TK-Systems (1) versetzt sind, und daß dem Funktelefon (2) die Anzahl der Zeitschlitze, um die die Übertragungsrahmen (5) zueinander versetzt sind, als Systemsteuerungsinformation bekannt ist.

4. TK-System (1) nach Anspruch 3, dadurch gekennzeichnet, daß das TK-System (1) höchstens so viele Funkzellen (CTS1...CTS6) mit derselben Übertragungsfrequenz aufweist wie die Übertragungsrahmen (5) Zeitschlitze haben, und daß die Übertragungsrahmen (5) einer Funkzelle (CTS1) des TK-Systems (1) um mindestens einen Zeitschlitz relativ zu den Übertragungsrahmen (5) der übrigen Funkzellen mit derselben Übertragungsfrequenz (CTS2...CTS6) versetzt sind.

5. TK-System (1) nach Anspruch 3 oder 4, dadurch gekennzeichnet, daß die Übertragungsrahmen (5) relativ zu Übertragungsrahmen (8) einer virtuellen Referenz-übertragungsrahmen-Struktur (Ref) versetzt sind.

6. Verfahren zur Übergabe eines Funktelefons (2) von einer Funkzelle (Cordless Telephone System, CTS1) eines Telekommunikations (TK)-Systems (1) an eine andere Funkzelle (CTS2) des TK-Systems (1), **dadurch gekennzeichnet**, daß dem Funktelefon (2) vor der Übergabe des Funktelefons (2) von der einen Funkzelle (CTS1) an die andere Funkzelle (CTS2) Systemsteuerungsinformationen übermittelt werden und das Funktelefon (2) unter Ausnutzung der Systemsteuerungsinformationen in der anderen Funkzelle (CTS2) registriert wird.

7. Verfahren nach Anspruch 6, dadurch gekennzeichnet, daß die Systemsteuerungsinformationen dem Funktelefon (2) im Rahmen der Registrierung in dem TK-System (1) übermittelt werden.

8. Verfahren nach Anspruch 6 oder 7, dadurch gekennzeichnet, daß die Systemsteuerungsinformationen dem Funktelefon (2) im Rahmen der Registrierung in einer Funkzelle (CTS1...CTS6) übermittelt werden.

9. Verfahren nach einem der Ansprüche 5 bis 8, dadurch gekennzeichnet, daß das Funktelefon (2) während einer Telekommunikations (TK)-Verbindung von der einen Funkzelle (CTS1) an die andere Funkzelle (CTS2) übergeben wird.

10. Verfahren nach einem der Ansprüche 5 bis 9, dadurch gekennzeichnet, daß die im Rahmen der TK-Verbindung zu übertragenden Informationen nach dem Time Division Multiple Access (TDMA)-Übertragungsverfahren in Übertragungsrahmen (5) mit mehreren Zeitschlitzen übertragen werden, und daß die Systemsteuerungsinformationen in einem Systemsteuerungsfenster (Broadcast Channel, BC) des Übertragungsrahmens (5) an das Funktelefon (2) übertragen werden.

11. Verfahren nach einem der Ansprüche 5 bis 9, dadurch gekennzeichnet, daß die im Rahmen der TK-Verbindung zu übertragenden Informationen nach dem Time Division Multiple Access (TDMA)-Übertragungsverfahren in Übertragungsrahmen (5) mit mehreren Zeitschlitzen übertragen werden, und daß die Systemsteuerungsinformationen in einem Nutzdatenfenster des Übertragungsrahmens (5) an das Funktelefon (2) übertragen werden.

12. Verfahren nach Anspruch 10 oder 11, dadurch gekennzeichnet, daß die Übertragungsrahmen (5) in einer Funkzelle (CTS1) des TK-Systems (1) um mindestens einen Zeitschlitz relativ zu den Übertragungsrahmen (5) zumindest der benachbarten Funkzellen (CTS2, CTS6) mit derselben Übertragungsfrequenz versetzt sind, und daß dem Funktelefon (2) die Anzahl der Zeitschlitze, um die die Übertragungsrahmen (5) zueinander versetzt sind, als Systemsteuerungsinformationen übermittelt wird.

13. Verfahren nach Anspruch 12, dadurch gekennzeichnet, daß das TK-System (1) höchstens so viele Funkzellen (CTS1...CTS6) mit derselben Übertragungsfrequenz aufweist wie die Übertragungsrahmen (5) Zeitschlitze haben und daß die Übertragungsrahmen (5) einer Funkzelle (CTS1) des TK-Systems (1) um mindestens einen Zeitschlitz relativ zu den Übertragungsrahmen (5) der übrigen Funkzellen (CTS2...CTS6) mit derselben Übertragungsfrequenz versetzt sind.

14. Verfahren nach Anspruch 12 oder 13, dadurch gekennzeichnet, daß die Übertragungsrahmen (5) relativ zu Übertragungsrahmen (8) einer virtuellen Referenz-übertragungsrahmen-Struktur (Ref) versetzt sind.

15. Verfahren nach einem der Ansprüche 5 bis 14, dadurch gekennzeichnet, daß mindestens ein Übertragungsparameter der TK-Verbindung nach einem bestimmten Algorithmus geändert wird, wobei dem Funktelefon der Algorithmus zumindest der benachbarten Funkzellen (CTS2, CTS6) übermittelt wird.

16. Verfahren nach Anspruch 15, dadurch gekennzeichnet, daß die Übertragungsfrequenz (f11, f12 ..., f63, f64) nach einem bestimmten Algorithmus geändert wird, wobei dem Funktelefon (2) der Algorithmus zumindest der benachbarten Funkzellen (CTS2, CTS6) übermittelt wird.

17. Verfahren nach einem der Ansprüche 5 bis 16, dadurch gekennzeichnet, daß Statistiken darüber geführt werden, in welche andere Funkzelle (CTS2...CTS6) von einer Funkzelle (CTS1) bevorzugt gewechselt wird und daß dem Funktelefon (2) die Vorzugswechselrichtungen als Systemsteuerungsinformationen übermittelt wird.

18. Verfahren nach einem der Ansprüche 5 bis 17, dadurch gekennzeichnet, daß die Systemsteuerungsinformationen auf Anfrage des Funktelefons (2) an das Funktelefon (2) übermittelt werden.

19. Verfahren nach einem der Ansprüche 5 bis 18, dadurch gekennzeichnet, daß die Systemsteuerungsinformationen mit einer bestimmten Bakenfrequenz periodisch an das Funktelefon (2) übermittelt werden.
